(19) Europäisches Patentamt
European Patent Office
Office européen des brevets

(11) **EP 3 168 805 A1**

(12) **EUROPEAN PATENT APPLICATION**

(43) Date of publication:
**17.05.2017 Bulletin 2017/20**

(51) Int Cl.:
***G06Q 50/06*** *(2012.01)*

(21) Application number: **15194019.4**

(22) Date of filing: **11.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Enerlife S.R.L.**
**34122 Trieste (IT)**

(72) Inventors:
• **Pacorini, Lorenzo**
  **I-34122 Trieste (IT)**
• **Sabatini, Riccardo**
  **34122 Trieste (IT)**

(74) Representative: **Spadaro, Marco et al**
**Cantaluppi & Partners**
**Via Pellegrino Strobel, 8**
**20133 Milano (IT)**

(54) **METHOD AND SYSTEM FOR CONTROLLING ENERGY CONSUMPTION VALUES**

(57) There is described a method and the relevant system for controlling the energy consumption of an electrical and/or air-conditioning installation, and an electrical installation comprising acquisition in a user area of the economic conditions of the contract of the energy provider; collecting the economic conditions of other energy providers different from the first provider; collecting energy consumption data by means of suitable sensors and/or measuring instruments and transmitting them to a gateway, which sends them to a remote collecting and processing system. The user inserts in his own area a desired saving percentage; the system calculates the mean consumption line of the user and compares it with the objective consumption; and signals the difference of the mean consumption from the objective consumption and identifies the most advantageous provider.

*FIG.1*

**Description**

The present invention relates to the field of energy control, in particular a method and the relevant system of devices for energy control of a user, more specifically the control by the user of occurrences of energy consumption, in particular electrical and thermal energy.

The present invention also relates to the field of domotics.

Background of the invention

The control of energy consumption today represents an element of great interest not only for users, but also for decision-makers and legislators, and not only from an economic aspect of containing the energy expenditure but also owing to the ever increasing awareness of environmental problems.

Many national and local standards today impose on users measures for containing energy consumption, for example, with the installation of more efficient heating systems, but they also encourage with economic and fiscal measures improvements to buildings for better thermal insulation.

For their part, users wish to have greater control over their energy consumption, being able to determine and decide the level of consumption and the resultant economic saving.

There are now a large number of studies about the possibility of reducing the occurrences of energy consumption by means of the so-called *behavioural energy saving,* that is to say, energy savings generated by changing how we behave. The European Environment Agency in a technical report published in 2013 and entitled "Achieving energy efficiency through behaviour change: what does it take?" dedicated a chapter to the importance of feedback and the definition of objectives in order to encourage families to reduce occurrences of consumption, asserting that the imposition of an objective may be suitable for having a greater impact, in terms of speed of change of the practices, than an incentive or an award.

Domotics is an interdisciplinary science which is directed towards improving the quality of life in buildings, of the habitation and functional type, such as workplaces, places of study and generally of collective life. One of the aspects of this discipline relates to the automation and the control of the air-conditioning installations (heating and/or cooling) of the buildings and the single habitation units.

The prior art provides various examples of systems for controlling energy consumption.

There are known systems which provide an analysis of the energy costs, as, for example, described in EP1593072, WO2003025898 and US20110029461.

There are also known systems for measuring the energy consumption, in particular electrical consumption, which operate in a wireless manner, as, for example, described in US7463986 and EP2261608.

The known systems allow the user to have monitoring of his individual energy consumptions.

The commercial suppliers of energy are on the market in a competitive system and constantly propose new offers for the user.

It is felt that there is a need for the provision of an integrated system which allows the user to constantly monitor his own energy consumptions, including in a remote manner, and to carry out active control over the management thereof, in particular from the point of view of energy saving.

It is also felt that there is a need to provide the user with simple information concerning the method of controlling his own energy consumptions, that is to say, means which process and give the information in a manner which is readily and immediately comprehensible for the user.

Furthermore, it is also felt that there is a need for the user to find on the market an energy provider which is advantageous in terms of the contract and which is suitable for the lifestyle and type of consumption of the user.

Until now, to the knowledge of the inventors, there is not known a system for controlling energy consumptions which provides an integrated solution to this need.

**Statement of invention.**

There has now been invented a method and the relevant system which solves or improves the problems of the prior art.

The present invention relates to a method for controlling the energy consumption, understood to be electrical energy consumption and/or electrical energy or fuel consumption for the production of thermal energy and/or cooling energy by an electrical and/or air-conditioning installation, comprising the following steps:

a) inserting the economic conditions present in the contract of the energy provider in an area which is reserved for the user and which is located in a remote system;

b) collecting the data relevant to the economic conditions of other energy providers different from the provider of step a) and archiving the data in the remote system;

c) collecting energy consumption data of the user by means of suitable sensors and/or measuring instruments;

d) transmitting the data from those sensors and/or measuring instruments to a gateway;

e) sending the data by means of the gateway to a remote collecting and processing system;

f) inserting in the user area a desired saving percentage with respect to the costs incurred and/or calculated by applying to the consumptions of the user collected in step c) the data collected in step a);

g) inserting in the user area two components a and b of the saving percentage, wherein a and b are between 1 and 10 and the total thereof is equal to 10 and wherein the component a represents the desired reduction in price and the component b represents the desired reduction of the consumptions with respect to the total saving percentage inserted in step f);

h) calculating the mean consumption line of the user;

i) calculating the objective consumption line, that is to say, the consumption line which allows achievement of the reduction objective calculated by multiplying the component b for consumption reduction defined in step g) for the saving objective defined in step f), by applying a reduction percentage to the consumptions present on the mean consumption line formed at step h);

j) calculating the resultant cost by applying to the objective consumption line obtained in step i) the economic conditions formed at step b);

k) identifying the lesser of the costs calculated in step j), calculated by applying the desired saving percentage inserted in step f) to the costs incurred calculated in step j);

l) inserting and representing the objective line obtained in step i) and the offer identified in step k) in the reserved user area and/or sending the data to at least one or a plurality of remote display devices which are arranged at the premises of the user;

m) optionally, comparing, in the reserved user area and/or at one or a plurality of remote display devices which are arranged at the premises of the user, the objective line obtained in step i) and the data collected in step c), thereby allowing the user to verify in substantially real time the progression of the consumptions with respect to the objective line.

An embodiment of the above-mentioned method provides for carrying out the steps a), d), e), h) so as to give the energy consumption values and the values are inserted in a reserved user area in the remote system, and/or sending the data to at least one or a plurality of remote display devices arranged at the premises of the user.
An embodiment of the above-mentioned method provides that in step e) the values are processed so as to give an index and a line of thermal efficiency of this installation.
According to the present invention, the energy consumption is the electrical and/or thermal energy consumption, for example, of an installation selected from the group comprising a boiler, heat pump and photovoltaic installation and/or thermal solar installation.
In an embodiment of the present invention, there is provided in the method a display which is capable of transmitting a light signal, which indicates the state of the method. In a preferred embodiment, the light signal is of a different colour if the value of the difference described in step m) in the above-mentioned method is greater than, equal to or less than the cost value and/or reduced consumption imposed by the user, or, in the alternative, is of a variable intensity of a colour or of different colours in accordance with the difference with respect to the cost value and/or reduced consumption. In another embodiment, the display indicates the state of the energy efficiency of the installation. For example, the signal is of a different colour if the value of the real energy efficiency of the installation is greater than, equal to or less than the value of the energy efficiency indicated by the user or declared by the producer of the installation.
The present invention also relates to a method for controlling the thermal capacity of a building or a habitation unit comprising the following steps:

a) recording the external temperature with respect to the building or habitation unit;

b) measuring the internal temperature of the building or habitation unit;

c) calculating the heating or cooling line of the building or habitation unit so as to define the internal temperature gradient of the building or habitation unit in relation to the external temperature;

d) measuring the time of variation of 1°C, or a fraction of a degree, with the air-conditioning installation off;

e) inserting and representing the measurement in a reserved user area and/or sending the measurement to at least one or a plurality of remote display devices which are arranged at the premises of the user.

The present invention also relates to a method for calculating the mean cost of the energy consumption of a user, comprising:

a) calculating the energy consumption of an air-conditioning installation necessary in order to increase or decrease by 1°C (or a fraction of a degree) the internal temperature of a building or habitation unit;

b) inserting and representing the measurement in a reserved user area and/or sending the measurement to at least one or a plurality of remote display devices which are arranged at the premises of the user.

The present invention also relates to a method for establishing the economic advantage of the operating programme of an air-conditioning installation comprising:

a) establishing the time bands with recording of the presence of a living subject, in particular human being in a building or a habitation unit;

b) identifying the heating times in the absence of the presence inside the building or habitation unit;

c) representation in a reserved user area, and/or sending the identification to at least one or a plurality of remote display devices which are arranged at the premises of the user, of the times at which the building or unit was heated in the absence of the presence and the relevant cost incurred, calculated on the basis of the data of the contract of the provider, the data having been previously inserted in a reserved user area located in a remote system.

The present invention also relates to a system for controlling an air-conditioning installation comprising:

a) one or more devices for collecting data at the point of use, which are operationally connected to a gateway; the gateway being operationally connected to

b) a remote system, the remote system optionally being operationally connected to:

c) one or more display devices at the point of use;

characterized in that the display devices are incorporated in the gateway.

The present invention also relates to a computer programme for carrying out the method of the present invention, when the computer programme is carried out in a data-processing system.

The present invention also relates to a computer programme comprising a means which can be used by a data-processing system, the computer programme, when it is carried out in a data-processing system, causing the system to carry out the method described above.

The present invention also relates to a control device of an air-conditioning installation comprising means for carrying out the steps of the method of the present invention. The present invention also relates to an air-conditioning installation comprising the control device.

The present invention will now also be described in detail with reference to the Figures, in which:

Figure 1 is a schematic perspective illustration of an exemplary embodiment of the gateway comprising a display device.

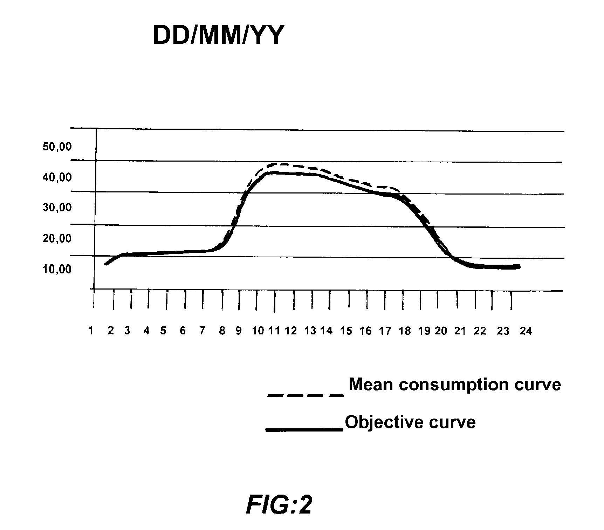

Figure 2 is an exemplary illustration of an application of the method according to the present invention, which shows the consumption line positioned as an objective by the user (solid line) and the mean consumption line of the user (broken line).

Figure 3 is a schematic illustration of the system according to the present invention.

Figure 4 is another exemplary illustration of an application of the method according to the present invention, which shows the consumption lines positioned as objectives by the user (solid line) and the mean consumption lines of the user (broken line), together with the manners of display of the relationship between the mean consumption line and the objective consumption line, in the case of recordal and calculation which is daily, weekly and monthly.

**Detailed description of the invention**

According to the present invention, the term "energy consumption" is intended to be understood to be the electrical energy consumption and/or electrical energy or fuel consumption for the production of thermal energy and/or cooling energy.

According to the present invention, the term "economic conditions present in the contract" is intended to be understood to be the items of expenditure which accompany the energy bill, for example, but in a non-exclusive manner, tariffs and rates, wherein the tariffs may be subdivided by various types in accordance with the national standards and/or the conditions applied by the provider, for example, retail services, network services, taxes.

The collection of data on electrical energy consumption is carried out directly by means of suitable measuring instruments.

The air-conditioning installation may be both for heating and for cooling.

In the case of installations with boilers, the collection of data on consumption for the production of thermal energy is carried out, always by means of suitable instruments, by measuring the consumption of fuel gas for domestic use, the flow and temperature of the thermo-convection fluid (such as, for example, water) in the delivery circuit and in the return circuit.

If heat pump installations are used, the consumption for the production of thermal energy and/or cooling energy is established as above, with the difference that, instead of the consumption of the fuel, there is established the electrical energy consumption of the heat pump.

In the case of energy production installations by photovoltaic conversion, the collection of the production data of the photovoltaic installation is carried out, always by means of suitable instruments, by measuring the energy being discharged by the inverter which is connected to the production installation so as to establish:

- the energy production of the photovoltaic installation,
- the contribution of the photovoltaic installation to the total consumptions of the user monitored (in the case of the presence of automatic consumption).

The term "ambient data" is intended to be understood to be the internal temperature of the environment monitored, humidity, presence of a living being, concentration of volatile organic compounds, such as carbon dioxide, and any other parameter which can be advantageous for the analysis of the energy efficiency of the air-conditioning installation.

As set out above, the method of the present invention is also suitable for controlling the real thermal efficiency of an air-conditioning installation. The method comprises the following steps:

a) collecting consumption data for the production of thermal energy and/or cooling energy of the installation at the premises of the user by means of suitable sensors and/or measuring instruments;
b) collecting production data of thermal energy and/or cooling energy;
c) transmitting the data from the sensors and/or measuring instruments to a gateway;
d) sending the data by means of the gateway to a remote collecting and processing system;
e) processing the data into an index and line of thermal efficiency of the installation;
f) inserting and representing the index and line of thermal efficiency in a reserved user area in the remote system and/or sending the data to at least one or a plurality of remote display devices which are arranged at the premises of the user.

In an embodiment of the method according to the present invention, the at least one or the plurality of remote display devices are arranged at the user which is intended to be monitored.

In an embodiment of the method according to the present invention, the at least one or the plurality of remote display devices communicate the results of the index or line of efficiency, which is formed by means of the relationship between the energy produced and energy or fuel consumed, by means of alternation of timed colours, which are also able to be configured by the user.

In the method according to the present invention, the data of the contract of the energy provider to be inserted in a reserved user area located in a remote system are basically the tariffs and optionally any other piece of data which is useful for the method of the present invention, such as, for example, tariff-related conditions which are specific to or reserved for the user, tariffs which are differentiated in accordance with the type of habitation, climatic region, etc.

Energy saving

The method according to the present invention is also suitable for controlling the energy consumption, in particular for imposing and achieving objectives for energy saving by a user.

The calculation of the mean consumption line of the user (step h) of the method described above) may be carried out by defining, for example, the mean consumption in time periods of 15 minutes within a solar hour until the daily mean consumption for each day of the week is defined, and it is therefore possible to define the mean weekly consumption, that is to say, the total of the daily mean consumptions as previously obtained, the monthly mean consumption, that is to say, the total of the weekly mean consumptions as previously obtained, and the mean seasonal consumption, which is equal to the total of the monthly mean consumptions as previously obtained, in which the season is defined according to astronomical subdivision.

The calculation of the objective consumption line (step i) of the method described above is carried out, as mentioned above, by applying a percentage reduction to the predominantly significant consumptions present in the mean consumption line which is formed previously; those predominantly significant consumptions may be formed, for example, by taking into consideration only those consumptions which, when listed in descending order and cumulatively totalled, contribute to forming, for example, 80% - or another percentage to be selected, preferably from 70 to 90% - of the overall consumptions, that is to say, the consumptions formed by means of self-learning algorithms.

Economic saving

The method according to the present invention is advantageous for controlling the energy consumption, in particular for imposing and achieving objectives for economic saving by a user.

After having imposed the desired saving percentage, the user will have to give a weighting (between 1 and 10) to the component of price reduction and a weighting (between 1 and 10) to the component of reduction of the consumptions (the total of the two weightings must be equal to 10) (see step g) cited above). For example, if the desired saving percentage is 10% and the weighting attributed to the tariff reduction is 7, then the weighting on the consumption reduction is 3.

At this point, the system will calculate an objective consumption line (as calculated in the case of the energy saving) which may relate to a consumption reduction of 3%. There will be applied to this line the tariffs present in the offers which are archived in the remote system until the offer which, when applied to the consumption line, may bring about the maximum saving, is identified.

In an embodiment of the above-mentioned method for imposing objectives for reduction of energy consumption, there is provided a display which is capable of transmitting a light signal which indicates the state of the method. In particular, the signal is of a different colour if the value of the difference (comparison) described in step m) is greater than, equal to or less than the cost value and/or reduced consumption imposed by the user, or alternatively is of a variable intensity of a colour or of different colours in accordance with the difference with respect to the cost value and/or reduced consumption.

According to an embodiment similar to the one set out above, the display indicates the state of energy efficiency of a thermal installation, for example the signal is of a different colour if the value of the real energy efficiency of the installation is greater than, equal to or less than the value of energy efficiency indicated by the user or declared by the producer of the installation.

The present invention further relates to a method for establishing the economic advantage of the operating programmes of a heating or cooling installation comprising:

a) establishing the time bands with recordal of the presence of a living subject, in particular human being, in a building or a habitation unit;

b) identifying the heating or cooling hours in the absence of the presence inside the building or habitation unit;

c) representation in a reserved user area and/or sending the identification to at least one or a plurality of remote display devices which are arranged at the premises of the user of the hours in which the building or unit has been heated or cooled in the absence of the presence and the relative cost incurred, calculated on the basis of the data of the contract of the provider, the data having been previously inserted in a reserved user area located in a remote system.

As regards the method according to the present invention, the results of the processing operations of the data and calculations, in addition to being represented in a reserved user area in the remote system, can also be sent to display systems at the premises of the user. Those display devices are of known type, for example, personal computer, smartphone, tablet and other known devices.

The present invention also relates to a system for controlling the energy saving of a user comprising:

a) one or more devices for collecting data at the point of use, which are operationally connected to

b) un gateway, which communicates via the internet network with a remote system of saving and processing data and wherein the remote system is operationally connected to

c) one or more display devices at the point of use,

characterized in that the display devices are incorporated in the gateway.

According to the present invention, the control (metering) is relative to the electrical consumption and/or thermal consumption. In an embodiment of the invention, the system comprises at least one or a plurality of devices for collecting electrical consumption data, for example, meters, current clamps, which are operationally connected to a remote system for processing and storing data.

The devices for collecting data are operationally connected to a gateway, which communicates via the internet network with a remote system of saving and processing data and the remote system sends the processed data to the gateway again.

Examples of these devices are: device for electric current, for example, connected via radiofrequency (for example, Zigbee); volumetric consumption of methane gas, for example, connected via wire (for example, RS485); flow and/or temperature of water, for example, connected via wire (for example, RS485), ambient temperature, for example, via radiofrequency (for example, Zigbee).

The remote system is commonly a server.

In an embodiment of the invention, in the system, the one or more display devices are provided to indicate the state of the system. In a preferred embodiment, the one or more devices are a series of LEDs which is provided to generate a light signal which is variable in accordance with the state of the system, and optionally an optical guide for the diffusion of the light signal. In particular, the series of LEDs is of the RGB type, and optionally an optical guide for the diffusion of the light signal.

In a preferred embodiment of the present invention, the display provided with an LED strip RGB, and optionally an optical guide for the diffusion of the light signal, is integrated in the gateway.

According to the present invention, the term "state of the system" is intended to be understood to be the generation of a light signal by that display which is in accordance with the data sent by the remote system. By way of example, the data sent by the remote system represent the consumption data. The display is provided to transmit a light signal proportional to the consumption data sent by the remote system. The light signal may be suitably calibrated in a scale of light intensity and/or colour variation which is proportional to the data received from the remote system, as set out in greater detail below.

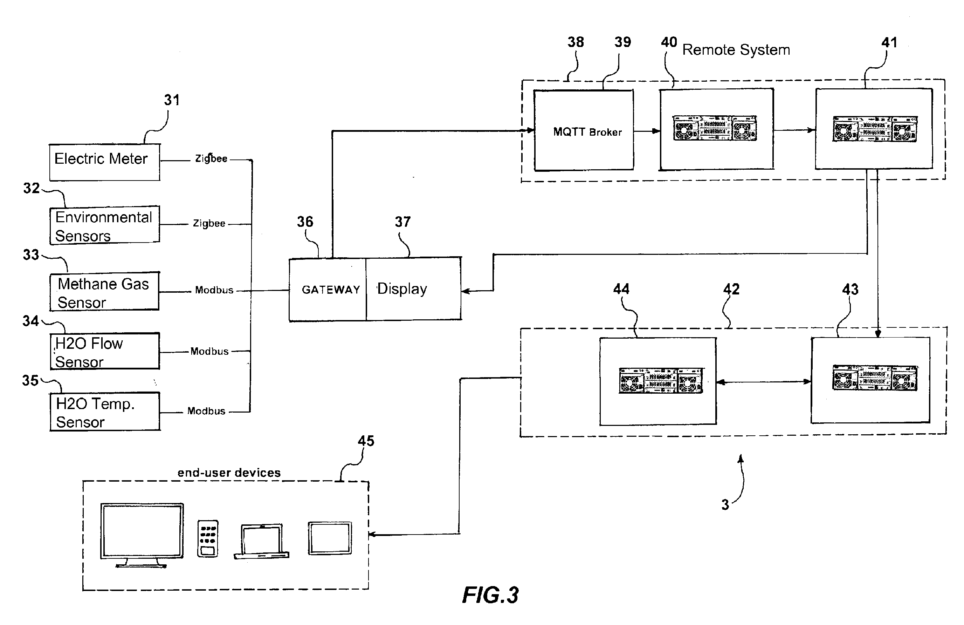

An exemplary diagram of the system is illustrated in Figure 3.

<u>System for controlling the energy consumption of the air-conditioning installation.</u>

With reference to the exemplary embodiment of Figure 3, the system (3) according to the present invention comprises a series of one or more sensors and/or measuring instruments (31, 32, 33, 34, 35) which are capable of collecting the energy consumption data (for example, electrical energy and/or gas energy). In the exemplary case, the sensors and/or measuring instruments are an electric meter (31), environmental sensors (32), a methane gas flow sensor (33), a water flow sensor (34) and water temperature sensors (35). There is connected to each of the sensors (31, 32, 33, 34, 35) a suitable means for transmitting the data recorded by the sensors (31, 32, 33, 34, 35). For example, a microcontroller Zigbee for the sensors (31, 32) and a serial communication protocol (for example, modbus) for the sensors (33, 34, 35). The data are sent to a gateway (36), which in a preferred embodiment of the invention has a display (37).

The gateway (36) sends the data to the remote system (38), typically a server, via a protocol MQTT (MQ Telemetry Transport). The protocol and the transmission are administered by a resident Broker which is on the remote system (39). The data received at the remote system are then transferred to a database noSQL - non-relational database - (40) for archiving and subsequently sent to analysis and aggregation systems (41). The data processed can be sent to the gateway (36) for the subsequent display (37) and are archived (42) in a database SQL - relational database (43), via which, by means of specific API (Application Programming Interface) they are subsequently made available to the end user for consultation, by means of devices such as PCs, tablets, smartphones, etc. (45), in the reserved area which is administered by a backend system (44).

The user may access his reserved area on the remote system and consult the energy consumption values of his air-conditioning system.

If the gateway (36) is provided with a display (37), the processed data are sent by the remote system (38) to the display (37).

Additionally or alternatively, when the data processed by the remote system (38) are sent to the display (37), the data can also be processed with backend means (44) and sent to end devices of the user (end-user devices), for example, a smartphone, a tablet, a personal computer or a desktop.

Collecting electrical consumption data

According to the present invention, collecting the data for electrical energy consumption is carried out by means of the installation at the electrical board of the monitored consumer of suitable instruments for acquiring the data. Those instruments may be energy meters which are produced by third parties, provided with suitable outputs, for example RS485.

In a particularly preferred embodiment of the invention, the data collection is carried out by means of a device described herein below and called an electric meter.

The electric meter allows recordal of the consumptions of electrical energy in real time and is a device which is based on the same microcontroller ZigBee which is mounted on the gateway. This provides four channels for measuring the current which are interfaced with current clamps (numbered one to four and usable in accordance with the number of electric lines or consumers to be monitored) to be installed in the electrical board of the installation to be monitored at the premises of the user, downstream of the meter of the energy provider.

The module ZigBee is connected to an analogue/digital converter with a serial interface SPI for reading and converting the values measured by the current clamps.

The electrical energy consumption is calculated by means of the recordings of electric current and voltage by means of the installation recorded by the meter.

The electrical energy consumptions are recorded in real time by the device and sent in radiofrequency to the gateway by means of the microcontroller ZigBee, which then serves to send them via the internet to a remote collecting and processing system.

The communication with the gateway is ensured by an internal patch antenna and - for situations which demand it - there is the possibility of also using an external antenna, to be connected to the connector MMCX which is mounted on the meter.

The device has two reset buttons (hardware and software) which are directly accessible from the outer side, if desired a state LED, and a Real Time Clock - supplied with power by a dedicated battery - in order to allow complete synchronization with real time at any time.

The device is directly supplied from the mains network by means of spring type clamps, but may further have provision for supply from a battery with an insertion switch.

The various printed circuits of the meter are intended for insertion in a container by 2 modules which can be engaged on a DIN rail, for standard assembly inside the electrical boards according to European standards DIN EN50022/60715.

If appropriate, the electric meter is certified according to the respective national or international standards, for example CE, R&TTE and LVD, according to the standards EN 61010-1, EN 300 220-1/220-2, EN 301 489-1, and the directives WEEE and RoHS.

The device allows the following variables to be recorded: reactive power, active power, amperage, voltage with a variable sampling which can be imposed up to 1 sec.

The recording is carried out via the addition of current transformers to the lines which it is intended to monitor (for example, general consumption, kitchen, living room or general consumption, power, lighting, etc.).

Collecting gas consumption data

The collection of gas consumption data is carried out via suitable data acquisition instruments. Those instruments may be gas meters which are produced by third parties.

In a particularly preferred embodiment of the invention, the data collection is carried out by means of a device which is described herein below and called a thermal meter.

The recording and monitoring system of the consumptions for the production of thermal energy is an extremely modular and flexible instrument, which allows measurement of the consumptions and performance levels of various types of heating installations, which are installed in buildings for civil use. That system calculates the thermal efficiency and efficiency of various types of heating installations, consequently being able to record and analyse in a remote manner anomalies or malfunctions and imposing alarm thresholds.

The modularity of that hardware allows installation in very heterogeneous systems in a manner completely independent of the various producers of heating installations existing on the market.

The flexibility of installation, the integration between measuring units of fuel gas for domestic use and devices for monitoring the water circuits and the central intelligence service, are among the advantages of such a device.

As in the case of the electric meter, that system is also interfaced directly with the gateway, sending the relevant data thereto.

The system provides for two main components for measuring the levels of consumption: a sensor for recording the flow of fuel for domestic use which supplies the boiler and a calorimeter for recording the flow of the heat-carrying fluid and the temperature difference thereof between the supply and return of the heating circuit or hot sanitary water.

Calorimeters, in particular, can be installed in variable numbers, in accordance with the type of heating installation to be monitored: by way of example, a habitation with a boiler which controls the heating circuit and hot sanitary water can reach two calorimeters, in addition to the fuel flow sensor for domestic use. The modularity of the system affords great flexibility, affording the possibility of installing a greater number of calorimeters, with constraints linked only with the physical operating limits of the ports, the peripherals and the chipset, the chipset being the whole of the integrated circuits of a motherboard which serve to switch and direct the information traffic passing via the system bus, between the CPU, RAM and controller of the input/output peripherals.

Unlike the electrical metering system, those devices communicate with the gateway via RS485 by means of the ModBus protocol: this is a serial connection which requires cabling by means of a suitable wire and which allows the connection of objects to each other which are spaced apart by up to 1200 m. The network connected by means of serial ports RS485 is a network of the "daisy-chain" type (or in/out), wherein all the devices which are supported on the same network are connected in a serial manner: the gateway always acts as the master and - on the basis thereof - there are connected in series first the fuel flow sensor for domestic use (where present) and then the calorimeters, without precluding the possibility of connecting downstream other devices which are provided with a serial interface RS485 (and ModBus protocol).

Going into greater detail, the calorimeters are constituted by 2 main components: the first includes a flow sensor and a temperature sensor to be fixed to the pipe where the heat-carrying fluid flows out of the installation, in addition to the electronic board which is necessary for acquiring the measurements and the transmission thereof to the gateway via the bus RS485; the second, however, includes a temperature sensor for heat-carrying fluid entering the installation, which sensor is connected in a similar manner to the electronic board described above. Each calorimeter, therefore, includes a series of connections with respect to the relevant sensors described above and an acquisition board for acquiring and transmitting the measurements to the gateway; the 2 components are physically separate and are connected by means of the analogue wire which places them in communication with the electronic board for acquiring the measurements.

The electronic acquisition board described above is also the same for the device for measuring the fuel flow for domestic use.

The same electronic board installed with the fuel flow measuring device for domestic use and with each calorimeter further has a DIP switch for attributing a specific ID to each element of the chain; the same DIP switch further allows assignment to the last device of the series of the function of the terminal closure, activating a suitable termination resistance, which is necessary in the bus RS485 in order to ensure a correct transmission line.

There are further provided a reset button for hardware and optionally 2 state LEDs which are capable of communicating, one when the device is supplied with power, and the other when data are exchanged on the serial. The wiring RS485, in addition to allowing the transmission of the measurements, further carries from the gateway to each sensor the required power supply of 12 V.

Advantageously, the great flexibility of the system described above - which can be adapted to the greatest possible number of types of existing installations - further provides for the integration with the electrical metering system where necessary: in the case of the presence of a heat pump, for example, in addition to the circuit of the heat-carrying fluid which will be monitored with the calorimeters, it will be necessary to measure - as well as the fuel for domestic use - the consumptions of electrical energy of the pump itself, and this will be possible, for example, by means of the meters which, in a state optionally provided with suitable current transformers, will transmit to the gateway the electrical energy consumption data recorded.

The pipes used for the recording devices may be, for example, with a diameter from ¾" - that is to say, the measurement which is most common in the domestic field - and the connectors, for example, of the female gas thread type, so as to allow ease of installation.

The system according to the present invention is suitable for monitoring any type of installation, once it has been adequately sized. For example, in the residential domestic field, there can be monitored methane type boilers with a power up to 35 kW, capacities of methane gas up to 4.17 mc/h and water up to 6.12 mc/h.

The instrument, which is positioned on the pipe of the gas which supplies the boiler, records therefrom the cubic metres of gas consumed with sampling, for example, every 5 sec.

All the devices described above can be certified according to the standards of the location of use.

Collecting water flow data and temperature data of the heat-carrying fluid being delivered

The collection of the flow data is carried out by means of suitable data acquisition instruments. Those instruments may be measuring instruments which are produced by third parties and which are provided with an output RS485 or an instrument which records the flow (expressed in litres/minute) and the temperature of the water being discharged from the generator installation (gas boiler/condensation boiler/heat pump) or by the boiler in the case of HSW (hot sanitary water) and introduced into the heating/cooling circuit or into the hot sanitary water circuit.

The collection of temperature data for the returning water is carried out by means of suitable data acquisition instruments. Those instruments may be measuring instruments which are produced by third parties and which are provided with an output RS485 or an instrument which records the temperature of the returning water from the heating/cooling circuit or, in the case of an HSW (hot sanitary water) circuit, the intake flow into the boiler.

Collection of data of environmental elements

The collection of those data is carried out by means of an external board and relates, for example, to luminosity, humidity, temperature, sound level, movement (for example, with a PIR - passive infrared sensor); VOC (Volatile Organic Compound), carbon dioxide ($CO_2$), pressure/altitude.

The collection of the data indicated above is carried out by means of an electronic board provided with a microcontroller ZigBee for connection to the gateway. The board may be supplied both by means of a battery and by means of the electrical network. It is provided with an internal memory of the flash type for archiving the environmental parameters acquired and for the subsequent forwarding to the gateway. The sensors which compose the board are:

- humidity and temperature sensor,

- luminosity sensor (for example, a phototransistor),

- microphone for recording sounds,

- sensor for recording air pollutants,

- sensor for recording the pressure and humidity,

- sensor for recording the human presence (for example, PIR with a Fresnel lens incorporated),

- sensor for recording $CO_2$.

Sending the consumption data by means of a gateway to a remote collecting and processing system

The data collected in the preceding steps are sent via radio or via wire (RS485) to the gateway which, by means of an internet connection, to which it gains access in conventional manner, for example WiFi, ethernet, GPRS/UMTS, sends the data to a remote system for collecting and processing the data.

The gateway is provided with internal memory which, in the case of absence of an internet connection, allows the data to be saved and subsequent forwarding when the connection is restored.

The data sent to the remote system are subsequently processed to give a series of values relating to the consumption, such as, for example, instantaneous consumption expressed in watt or kilowatt; instantaneous consumption expressed in watt or kilowatt in relation to the contractual power, providing an indication of the percentage of consumption with respect to the contractual power available in a given consumer; historical progression of the general consumption, that is to say, the representation of the "contribution" of the monitored lines to the total consumption of the consumer.

The consumption values can be inserted into a reserved area of the remote system, to which the registered user may gain access by means of his own credentials. Alternatively, the consumption values are sent in the form of a report to at least one or a plurality of remote display devices. The display devices can be arranged in an area accessible to the user or inside the spaces inhabited or used by the user.

The remote display devices can be of any conventional type, for example, analogue or digital displays.

A particularly preferred display device, to which the present invention also relates, is the above-mentioned gateway, which is provided with at least one or a plurality of displays. The display comprises an LED strip RGB, and optionally an optical guide, for the diffusion of the light signal.

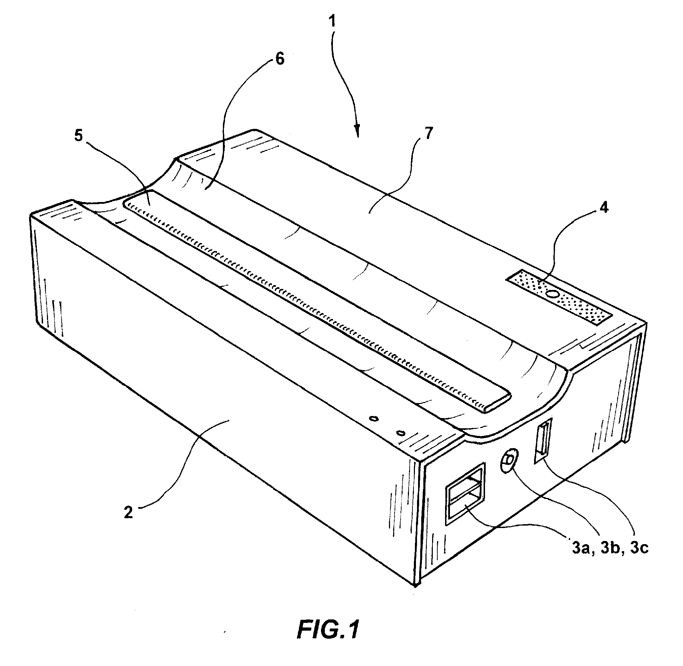

With reference to Figure 1, the gateway (1) comprises an outer casing (2) which provides, for example, at one of the sides, one or more connection ports (3a-c) (shown schematically in the Figures). The ports may be arranged in any manner at different sides of the gateway. There may also be provided a ventilation grille (4), for example, positioned on the upper side. The Gateway shown in Figure 1 has an aesthetic appearance which does not constitute any limiting technical feature to which the present invention relates.

The gateway (1) comprises an LED strip RGB (5), which is advantageously positioned in a visible position. In the exemplary form of Figure 1, the strip is positioned on the upper face.

In a preferred embodiment, shown in Figure 1, the strip (5) is positioned in a recess (6) which is formed in the upper face (7) of the casing (2). The arrangement of the strip (5) in the recess (6) may be brought about in any visible face of the casing (2) and may also be produced in the case of a plurality of LED strips RGB, including in a manner independent of each other.

In a preferred embodiment, the recess (6) is constituted from material, or is painted, so as to constitute a surface which reflects the light produced by the strip (5).

Advantageously, the casing (2) may be of a darker colour with respect to the colour of the recess (6), so as to form a contrast of colour between the casing (2), or at least the surface which receives the recess (6), and the recess (6) in order to obtain an effect of light which makes the light signal of the strip (5) more visible.

Alternatively, if the recess (6) is not provided, the surface under the strip (5) may be light-reflective, or of a colour which is lighter with respect to the casing (2).

The effect of light given by the strip (5), optionally in the presence of the recess (6) and/or the combination of colours as set out above, may also constitute an element of the environmental fittings.

The LED strip RGB (5) is connected to the motherboard and takes on different colourations in accordance with the value established by one of the methods of the present invention described above. The different colourations may also be imposed by the user in his own reserved area, in which it is possible to select the set of predefined colours which it is desirable to associate with the variations of the above-mentioned values.

For example, the user may impose a value of energy consumption (electric, gas, or some other) to be monitored by means of the gateway according to the present invention. In the course of the receipt of the data from the remote system the gateway, via its own LED strip, becomes illuminated with a different colour in accordance with the consumption both below and above the value imposed by the user. It is also possible to impose the LED strip in such a manner that it is illuminated as a graduated scale, continuously showing the consumption variations. The illumination may change when the programmed threshold is exceeded.

The illumination of the LED strip in the various manners thereof may signal any piece of data and parameter which is processed by the remote system in accordance with the method applied from those described above. For example, the results of the index of efficiency or coefficient of performance by means of alternation of colours over time, which may also be configured by the user.

The remote display device may take on, for example, the following alternations of colour: alternation of colour in accordance with the effective efficiency with respect to the objective efficiency (green if effective efficiency is greater than or equal to objective efficiency, yellow if effective efficiency slightly below objective efficiency, red if effective efficiency less than objective efficiency); or alternation of colour in accordance with the cost (in this case it is necessary for the user to insert the unit cost per $m^3$ of methane or per kilowatt/hour of electricity obtained from his own provider, which item of data can be taken from the electricity bill; the data can be inserted in the configuration page of the user) of the thermal kilowatt/hour produced by the generation installation (for example, green if the cost of the thermal kilowatt is in line with the mean cost recorded in a given period t, or if it is in line with the objective cost, yellow if the cost of the thermal kilowatt is slightly greater than the mean cost recorded in a given period t, or if it is slightly greater than the objective cost, red if the cost of the thermal kilowatt is greater than the mean cost recorded in a given period t, or if it is greater than the objective cost).

In another example, the device may assume an alternation of colour with respect to an approximation of the cost incurred to the objective cost defined in a period of time.

For example, it is possible to impose an objective cost in a given time period; at any time the system calculates the relationship between the cost effectively incurred (equal to energy cost per energy consumed) up to that time and the objective cost, by means of the following equation:

$$\frac{(daily\ cost\ (x) + daily\ cost\ (x+1) + daily\ costo\ (x+n)}{Objective\ cost\ of\ the\ period}$$

The difference between the cost incurred and the objective cost at any time is represented in the display with an alternation of colour. For example:

relationship < 0.25 → colour green
0.25 <relationship< 0.50 → colour yellow
0.50 <relationship< 0.75 → colour orange
relationship>0.75 → colour red

In another example, the remote display device can assume the following alternations of colour. In accordance with the percentage of use of the contractual power (= power used/contractual power), for example:

- green in case of consumed power less than 33% of the contractual power;
- yellow in case of consumed power between 33% and 66% of the contractual power;
- red in case of consumed power between 66% and 100% of the contractual power;
- flashing red in case of consumed power greater than 100% of the contractual power.

In a different example, the colour will be green if the consumption recorded at the time t (for example, the hourly consumption) is less than or equal to the mean consumption at the time t (for example, the mean hourly consumption calculated in a defined time period, for example, the mean hourly consumption by season), orange if the consumption recorded at the time t (for example, the hourly consumption) is slightly greater than the mean consumption at the time t (for example, the mean hourly consumption calculated in a defined time period, for example, the hourly mean consumption by season), red if the consumption recorded at the time t (for example, the hourly consumption) is substantially greater than the mean consumption at the time t (for example, the mean hourly consumption calculated in a defined time period, for example, the mean hourly consumption by season).

There will now be provided further details concerning the system according to the present invention.

The system according to the present invention comprises a series of devices which allow the recording in real time of the energy consumptions, both electrical and thermal, therefore also being able to know the efficiency of different types of heating installations.

The data collection system provides for the installation of physical sensors which are capable of communicating with a gateway, which in turn transmits the measurements in real time, by means of the internet, to the data-processing infrastructure, which is constituted substantially by a series of remote systems (for example, external servers).

The sensors for recording the electrical consumption levels are simple to install, can communicate via mesh-network by means of microcontrollers ZigBee of common industrial use and use, for example, current clamps for measuring the current. Those sensors further allow the recording of the production of a photovoltaic installation (photovoltaic energy produced and relative autoconsumption), where present and connected to the general electrical board of the building.

For the consumption levels for the production of thermal energy, the system allows monitoring both of the gas portion and the portion of the heat-carrying fluid and the water in the case of circuits of hot sanitary water, both elements being necessary in order to be able to calculate the efficiency of a heating installation. There are installed sensors which allow the recording of the gas flow consumed by a boiler, other sensors in order to monitor the capacity and the temperature of the water which flows through the delivery circuit and the temperature of the water which flows through the return circuit.

The gateway is the connection location of the sensors with respect to the internet network. It comprises an embedded electronic board which is provided with access to the network by means of conventional systems, for example, Ethernet, WiFi, GPRS/UMTS.

The Ethernet connection is ensured by means of a standard network board, for example, 10/100, while for the WiFi connection there is mounted a wireless chip capable of acting both as Access Point and as Client. In the case of the connection GPRS/UMTS, it is advantageous to adopt a module, which is also provided, which supports different frequency bands.

The gateway has a microcontroller ZigBee, which is accessible from the operating system via serial UART, for communicating with the electrical energy measuring devices.

The communications WiFi, GPRS/UMTS and ZigBee occur by means of three specific internal antennae on-chip. In order to ensure the best possible reception for the device, for the modules GPRS/UMTS and ZigBee there is the possibility of installing an external multiband antenna, by means of coaxial micro-connectors MMCX which are wired to panel connectors SMA.

For the communication with devices which do not have a chip ZigBee, as is the case in sensors for recording thermal consumptions, the gateway has a serial interface RS485.

The device is normally supplied by network (for example, 5V) by means of a feeder with a connector, such as, for example, a jack of 2.1 mm, and has a CPU, for example, an ARM Cortex A8. The CPU is a digital processor which supervises all the functionalities of the digital computer by coordinating in a centralized manner all the other processing units present in the hardware architectures of the processing computer, various internal peripherals or electronic boards (for example, coprocessor and processor of a digital signal). The function of the CPU is to carry out the instructions of a programme present in the central memory or primary memory (RAM) after having taken it from the secondary memory or mass storage, the ROM, or other devices.

Advantageously, there is provided a RAM memory, for example, 512MB DDR3 and NAND Flash 512MB.

There may optionally be provided a USB host port and a Micro-USB device. Advantageously, the gateway has devices for indicating the operating state, for example two state LEDs, as may have a removable SD Card connector and some serial service connectors.

The gateway itself acquires different environmental parameters, that is to say, temperature, humidity, luminosity, atmospheric pressure, volatile organic compounds, optionally carbon dioxide and presence and noise in the surrounding environment. They are environmental sensors of common use, while for the recording of the presence there is used a microphone coupled to a presence recorder (for example, PIR - passive infrared sensor). Those sensors are mounted on a dedicated electronic board, which is connected to the gateway via microcontroller ZigBee or via a USB cable.

The processing of the data may be carried out both on a remote system, in a centralized manner, and on the remote peripherals (the gateways) in a decentralized manner and in a transparent manner for the remainder of the data usage system.

The system according to the present invention is capable of calculating in real time the cost of the energy consumed in any time period using contractual parameters which are introduced by the user or by the company. In this manner, there is obtained a comparison of bills based on the real consumptions, and not estimates.

The system of the invention further makes it possible for the user to "tag" the consumption of his own domestic electrical devices by means of a user interface which is simple and intuitive. Before use of a specific domestic electrical device, the user has the possibility of selecting it at his own portal (also accessible via tablet). Once selected, it is simply necessary to press "start" slightly before starting up the domestic electrical device, with this action the system knows that shortly there will be an increase in the consumption levels resulting from the operation of that specific domestic electrical device, it consequently increases the frequency of sampling bringing it to a recording operation each second. The variation of electrical consumption in the active energy and reactive energy components thereof is therefore saved and associated with the specific domestic electrical device so as to be able to use it as a "sample" for the subsequent identifications thereof without any need to repeat the process.

The present invention also relates to a method for controlling the real thermal efficiency of a methane type heating installation which comprises the collection and sending to the remote system of the data concerning gas consumption, water flow consumption and temperature of the water being delivered and temperature of the water being returned. The remote system processes the data and generates an index of thermal efficiency, that is to say, the relationship between energy introduced into the circuit by the generation installation and energy consumed by the generation installation.

The energy consumed is obtained by converting the cubic metres/gas hours consumed into thermal kilowatt/hours. The energy introduced is obtained by converting the data acquired by the calorimeters into thermal kilowatt/hour. The processing of those data produces an index of effective thermal efficiency of the generation installation, for example, how much of the energy consumed is effectively introduced into the heating circuit, or the precise cost of each thermal kilowatt produced and the progression thereof in a time period. Similarly to what has been set out above, the index is inserted into a reserved user area, or alternatively sent in the form of a report to one or more remote display devices.

Similarly, the present invention also relates to a method for controlling the real thermal efficiency of a heating installation with a heat pump which comprises the collection of data of the electrical energy consumption, water and temperature of the water being delivered, temperature of the water being returned, the subsequent sending of the data collected by means of a gateway to a remote collecting and processing system, wherein the data are processed by calculating the relationship between the energy introduced into the circuit by the generation installation and the energy consumed by the generation installation (electrical kilowatt/hour).

The energy introduced is obtained by converting the data collected by the calorimeters into thermal kilowatt/hour and processing the data produces an index of effective thermal efficiency of the generation installation, for example, how much of the energy consumed is effectively introduced into the heating circuit, or the precise cost of each thermal kilowatt produced and the progression thereof in a time period. In this case, the index may also be inserted into a reserved user area, or alternatively sent in the form of a report to one or more remote display devices.

In the case of application of the method for controlling the energy consumption (metering) of a user according to the present invention, the data of energy consumption (electrical energy, gas, water flow, the delivery water temperature and the return water temperature), are collected by the system described above and processed. On the basis of the economic terms contained in the supply contract of the user, the remote system calculates the cost incurred and compares it with the cost calculated on the basis of parameters proposed by other administrators for a given time period. The data of the other suppliers are obtained mainly by means of the insertion and archiving in the server of the commercial offers present in the sector, in particular subdivided by geographical area, to give a series of costs, also in the form of a report ordered by price. That processing of the data may finally be placed in the reserved user area for the consultation thereof.

The present invention also provides for a method for imposing objectives of saving energy and/or economic saving by a user. In order to achieve a saving objective which is mainly of energy, the method is actuated by collecting data of energy consumption of the user by means of suitable sensors; the data are then transmitted to a gateway and are thereby sent to a remote collecting and processing system. The user inserts in a reserved area located in a remote system an "objective saving" parameter, for example, a percentage of reduction of consumption levels. The system then processes the mean consumption line of the user, which may be in accordance with the season, holidays and feast days. Therefore, there is calculated an objective consumption line which is obtained by reducing by a given percentage the predominantly significant consumptions present in the mean consumption line, derived previously until the cost objective imposed is reached. The objective consumption line compares the reduction of the predominantly significant consumptions, for example, those which compose approximately 80% of the total consumptions, but maintaining unchanged the lower consumptions which are difficult to eliminate, that is to say, those basic consumptions of the habitation in which it is very difficult to intervene. The objective consumption line is therefore inserted by the system into the reserved user area or sent to remote display devices which are arranged at the premises of the user so that the user can display it.

In order to achieve a saving and economic objective, as well as an energy objective, another method of the present invention provides firstly for insertion by the registered user into his own area in the remote system of the contractual data of his own supply contract for electrical energy and/or gas. After this insertion, he starts the collection of data of energy consumption and sends them by means of a gateway to a remote collecting and processing system, which could be, for example, the server where the reserved user area is located, or another server connected to the first one. The user inserts in his own area an objective cost (to be reached in accordance with the desired energy saving), in the form of a desired percentage of reduction of the cost of the supply, on the basis of the data sent. The user also inserts two components of that percentage of saving, which represent the desired reduction of the price and the desired reduction of the consumption levels with respect to the total percentage of saving previously inserted. The remote system processes the data to give a calculation of the objective cost by applying to the cost incurred by the user on the basis of his own contract in existence the desired percentage of reduction. The processing continues with the calculation of the mean consumption line of the user, which may be in accordance with the season, holidays and feast days, and the calculation of the mean cost incurred by the user on the basis of his own supply contract. Therefore, there is calculated an objective consumption line, which is obtained by reducing by a percentage (which is obtained by multiplying the weighting attributed to the reduction of the consumption levels for the desired saving percentage) the predominantly significant consumptions present in the mean consumption line, which is derived beforehand. The remote system searches in the server for the offers of other providers and applies them to the objective line, identifying the commercial offer which is highly advantageous with respect to the desired saving percentage. If none of the commercial offers archived is capable of achieving the objective cost value (or the desired saving percentage), the system calculates a new percentage of reduction of the consumptions (and the consequent objective consumption line) necessary for reaching the desired saving.

If the user has imposed only an objective cost, and not a reduction percentage of the consumptions, the system searches for offers present in the server which, when applied to the mean consumption line, allow the objective cost to be reached. If none of the offers present in the server is capable of allowing the objective cost to be reached, the system also proposes a percentage of reduction of the consumptions (and the consequent objective consumption line) which, in conjunction with the highly advantageous offer, is capable of allowing the objective cost to be reached.

Similarly, the present invention provides a method for imposing objectives of reduction of energy consumption (metering) by a user which reproduces the preceding method only in that the processing of the data leads as a result to the analysis, optionally in the form of a report, of the difference between the objective consumption and the effective consumption.

The present invention also provides a method for controlling the thermal capacity of a building or a habitation unit, as set out above. The method, which substantially calculates the cooling or heating line (temperature gradient), that is to say, the time used for the reduction or the increase of 1°C (or a fraction of a degree) of the internal temperature of the building or the habitation unit, respectively, with the heating or cooling installation on and off.

Similarly, the method according to the present invention also applies to the calculation of the mean cost of a °C, which substantially involves calculating the energy consumption necessary in order to increase or decrease the internal temperature by 1°C (or a fraction of a degree). This calculation, as for all the embodiments of the methods of the present invention, may be stored in the user area in the external system or sent to the gateway provided with a display.

If the gateway present at the point of use (building or habitation unit) is connected to one or more sensors suitable for the recording of the presence of a living subject, in particular a human being, the method of the present invention is also advantageous for establishing the economic efficiency (of the programming) of a heating system. The method comprises the recording of the time bands in which there was present a living being and identifying the heating times in the absence of that presence inside the building or habitation unit.

By way of example, the table below sets out an application of the method according to the present invention.

Table 1

| Day | Time | Mean consumption | Objective consumption |
|---|---|---|---|
| Monday | 00:00 | 0.09 | 0.09 |
| Monday | 00:15 | 0.13 | 0.13 |
| Monday | 00:30 | 0.09 | 0.09 |
| Monday | 00:45 | 0.09 | 0.09 |
| Monday | 01:00 | 0.10 | 0.10 |
| Monday | 01:15 | 0.08 | 0.08 |
| Monday | 01:30 | 0.10 | 0.10 |
| Monday | 01:45 | 0.09 | 0.09 |
| Monday | 02:00 | 0.08 | 0.08 |
| | | | |
| | | | |
| | | | |
| Monday | 07:00 | 0.70 | 0.61 |
| Monday | 07:15 | 0.88 | 0.77 |
| Monday | 07:30 | 0.90 | 0.79 |
| Monday | 07:45 | 0.83 | 0.72 |
| Monday | 08:00 | 0.67 | 0.59 |
| Monday | 08:15 | 0.77 | 0.68 |
| Monday | 08:30 | 0.88 | 0.77 |
| | | | |
| | | | |
| | | | |
| Monday | 15:00 | 0.23 | 0.20 |
| Monday | 15:15 | 0.15 | 0.15 |
| Monday | 15:30 | 0.17 | 0.17 |
| Monday | 15:45 | 0.22 | 0.19 |
| | | | |
| | | | |
| Monday | 16:00 | 0.21 | 0.21 |
| Monday | 16:15 | 0.23 | 0.20 |
| Monday | 16:30 | 0.21 | 0.21 |
| Monday | 16:45 | 0.18 | 0.18 |
| Monday | 17:00 | 0.21 | 0.21 |
| Monday | 17:15 | 0.16 | 0.16 |
| | | | |
| | | | |

(continued)

| Day | Time | Mean consumption | Objective consumption |
|---|---|---|---|
|  |  |  |  |
| Monday | 23:00 | 0.19 | 0.19 |
| Monday | 23:15 | 0.18 | 0.18 |
| Monday | 23:30 | 0.12 | 0.12 |
| Monday | 23:45 | 0.14 | 0.14 |

On the basis of a historical series of recordings, there is calculated the mean consumption expressed in kWh (kilowatt hours) of each day of the week, for example, the mean consumption of Monday with 15 minute segments.

In the mean consumption there is subsequently calculated the objective consumption, calculated on the percentage of reduction imposed by the user (in the example of Table 1, a reduction of 10%).

With the data calculated in this manner, there is constructed the objective consumption line (a specific line for each day of the week) to be used as a reference for the comparison with the effective consumptions of the user, generated after the imposition of the objective.

Three types of progression are calculated:

$$1) \; \text{Daily progression} = \frac{total \; of \; effective \; consumptions \; from \; 00{:}00 \; to \; current \; time}{total \; of \; objective \; consumptions \; from \; 00{:}00 \; to \; current \; time};$$

$$2) \; \text{Weekly progression} =$$

$$\frac{total \; of \; effective \; consumptions \; from \; 00{:}00 \; of \; first \; day \; of \; week \; in \; progress \; to \; current \; time}{total \; of \; objective \; consumptions \; from \; 00{:}00 \; of \; first \; day \; of \; week \; in \; progress \; to \; current \; time}$$

$$3) \; \text{Monthly progression} =$$

$$\frac{total \; of \; effective \; consumptions \; from \; 00{:}00 \; of \; first \; day \; of \; month \; in \; progress \; to \; current \; time}{total \; of \; objective \; consumptions \; from \; 00{:}00 \; of \; first \; day \; of \; month \; to \; current \; time}$$

The occurrences of progression are graphically represented in the private area of the user, for example, by positioning an indicator on the right of the objective, if the relationship between the effective consumption and the objective consumption is greater than 1, to the left of the objective if it is less than 1.

The position of the indicator is further distinguished by a specific colour (for example, red in the case of the relationship between the effective consumption and the objective consumption being greater than 1, yellow if the relationship between the effective consumption and objective consumption is close to 1, blue if the relationship between the effective consumption and objective consumption is less than 1).

The same chromatic range is replicated and displayed by means of the display of the gateway.

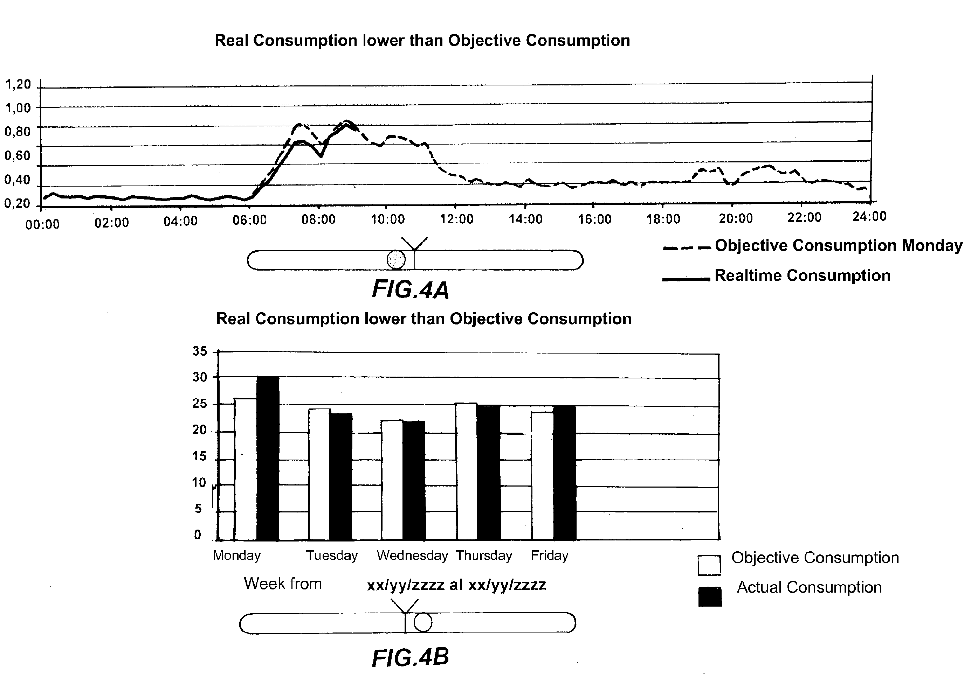

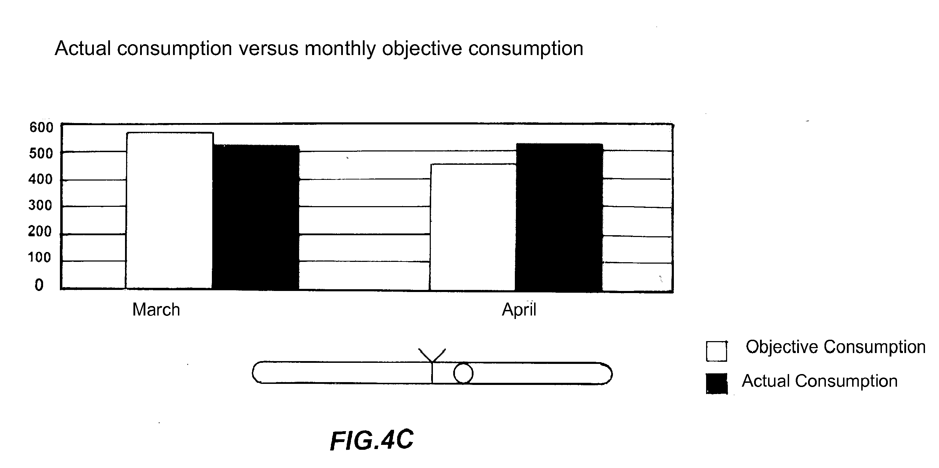

The example is also illustrated in Figure 4.

With reference to Figure 4A, upper panel, the graphic represents the progression of the effective consumptions, recorded in real time with respect to the objective consumptions established for that specific day of the week (in the example, the objective consumptions are for Monday). The graphic shows how the real consumptions (in the example from the time 00:00 to the time 09:00) are less than the objective consumptions for the same time period. The user was therefore consuming less than what was set as the objective.

The figure below the graphic schematically represents how the information on the progression of the consumption with respect to the objective is displayed by means of the positioning of an indicator (represented by the circle) with respect to the objective (represented by the vertical bar) in the display system present in the gateway. In the case in question, the user was consuming less with respect to the objective, therefore the indicator is positioned in the left portion of the bar. The distance with respect to the bar of the objective is in accordance with the difference between the effective consumption and the objective consumption. The LED strip of the gateway assumes different colourations in accordance with the positioning of the user with respect to his own objective, reflecting the same colourations present in the circle which is represented in Figure 4A. That function allows the user to verify his own positioning with respect to the objective without having to access his own reserved area.

With reference to Figure 4B, upper panel, the graphic represents the progression of the effective consumptions with respect to the objective consumptions established for a specific week. The graphic shows how the effective consumptions (in the example represented by the single days of the week) differ from the objective consumptions calculated for the respective days of the week. In the example illustrated above, the effective consumption recorded from Monday to Friday (hypothetical day of the week at which the user is) is greater with respect to the consumption which was set as the objective.

The Figure below the graphic schematically represents how the information on the progression of the consumption with respect to the objective is displayed by means of the positioning of an indicator (represented by the circle) with respect to the objective (represented by the vertical bar) in the display system present in the gateway. In the case in question, the user was consuming more with respect to the objective, therefore the indicator is positioned on the right side of the bar. The distance with respect to the bar of the objective is in accordance with the difference between the effective consumption and objective consumption. In this case, the LED strip of the Gateway also allows the user to control the progression of his own consumption with respect to the objective without having to access his own reserved area.

With reference to Figure 4C, upper panel, the graphic represents the progression of the effective consumptions with respect to the objective consumptions established for a specific month, or for a series of months. The graphic shows how the effective consumptions (in the example represented for single months) differ from the objective consumptions calculated for the respective months. In the example illustrated above, the effective consumption recorded in the month of March was less with respect to the objective consumption, while in the month of April the effective consumption is greater than the objective consumption imposed.

The Figure below the graphic schematically represents how the information on the progression of the consumption with respect to the objective is displayed by means of the positioning of an indicator (represented by the circle) with respect to the objective (represented by the vertical bar) in the display system present in the gateway. In the case in question, the user in the course of the month of April was consuming more with respect to the objective, therefore the indicator is positioned at the right side of the bar. The distance with respect to the bar of the objective is in accordance with the difference between the effective consumption and the objective consumption. In this case, the LED strip of the Gateway also allows the user to control the progression of his own consumption with respect to the objective without having to access his own reserved area.

As can be seen in the example set out above, the method according to the present invention affords the user the possibility of consulting in his own reserved area and/or displaying at the gateway his own positioning with respect to the objective on a daily, weekly or monthly basis. In the example set out above, the user has a consumption in the reference day less with respect to his own objective, over the week the consumption is slightly greater than the objective and over the month the real consumption is greater than the objective imposed.

The method of the present invention and the relevant system allow and incentivise the user to modify his own consumption behaviour in order to achieve the saving objectives and in any case to better control his own energy consumptions and his own air conditioning installation, whether it involves heating or cooling.

As a result of the method and the system according to the present invention, it is possible to set the reduction objectives of the consumptions. The user defines a percentage of reduction of consumptions desired and the system generates an objective line. It will be noted that the same functionality may be used to indicate for the user his own positioning with respect to the mean consumption recorded, or to communicate to the user how he has been consuming with respect to the mean of his own past consumption levels. This may be advantageous if the user identifies a commercial offer for the provision of energy which, when simulated on previous consumptions, is advantageous from the economic point of view. Having an indicator for the progression of the consumption with respect to the mean consumption may assist the user in maintaining the profile of consumption compatible with the commercial offer selected. In this case, the reference line will not be the objective consumption, but instead the mean consumption calculated with the same technique used for the objectives.

It is also possible to define a budget of expenditure: the user defines a budget of expenditure for a period of time defined and the system represents in real time the percentage of "use" of the budget defined.

Alternatively, it is possible to represent the power used with respect to the contractual power: there is represented in real time the percentage of power used in relation to the contractual power available.

Alternatively, providing a representation of the hours/costs arising from the heating of the habitation in the absence or presence of a person.

With regard to the aspects of the present invention relating to a computer programme, they are generally included within the scope of general knowledge of the person skilled in the art. With knowledge of the method of the present invention, there will be no difficulty in compiling the computer programme. The programme is contained in a medium which can be used by a computer or data-processing system, the medium is of the known type.

The control device of an air-conditioning installation comprising means for carrying out the steps of the method of the present invention is of the conventional type, for example, the equipment standards for controlling an air-conditioning installation, such as a chronothermostat.

**Claims**

1. A method for controlling the energy consumption of an electrical and/or air-conditioning installation, and an electrical installation comprising the following steps:

   a) inserting the economic conditions present in the contract of the energy provider in an area which is reserved for the user and which is located in a remote system;
   b) collecting the economic conditions of other energy providers different from the provider of step a) and archiving the data in the remote system;
   c) collecting energy consumption data of the user by means of suitable sensors and/or measuring instruments;
   d) transmitting the data from those sensors and/or measuring instruments to a gateway;
   e) sending the data by means of the gateway to a remote collecting and processing system;
   f) inserting in the reserved area a desired saving percentage with respect to the costs incurred and/or calculated by applying to the consumptions of the user collected in step c) the data collected in step a);
   g) inserting in the user area two components a and b of the saving percentage, wherein a and b are between 1 and 10 and the total thereof is equal to 10 and wherein the component a represents the desired reduction in price and the component b represents the desired reduction of the consumptions with respect to the total saving percentage inserted in step f);
   h) calculating the mean consumption line of the user;
   i) calculating the objective consumption line, that is to say, the consumption line which allows achievement of the reduction objective calculated by multiplying the component b for consumption reduction defined in step g) for the saving objective defined in step f), by applying the reduction percentage calculated in this manner to the consumptions present on the mean consumption line formed at step h);
   j) calculating the cost obtained by applying to the objective consumption line obtained in step i) the economic conditions formed at step b);
   k) identifying the lesser of the costs calculated in step j), calculated by applying the desired saving percentage inserted in step f) to the costs incurred calculated in step j);
   l) inserting and representing the objective line obtained in step i) and the offer identified in step k) in the reserved area and/or sending the data to at least one or a plurality of remote display devices which are arranged at the premises of the user;
   m) optionally, comparing, in the reserved area and/or at one or a plurality of remote display devices which are arranged at the premises of the user, the objective line obtained in step i) and the data collected in step c), thereby allowing the user to verify in substantially real time the progression of the consumptions with respect to the objective line.

2. A method according to claim 1, wherein there are carried out the steps a), d), e), h) to give the energy consumption values and the values are inserted in a reserved user area in the remote system, and/or sending the data to at least one or a plurality of remote display devices which are arranged at the premises of the user.

3. A method according to claim 2, wherein in step e) the values are processed to give an index and a line of thermal efficiency of the installation.

4. A method according to any one of claims 1 to 3, wherein the energy consumption is an electrical and/or thermal energy consumption.

5. A method according to any one of claims 1 to 4, wherein the installation is selected from the group comprising a boiler, heat pump and photovoltaic installation.

6. A method according to any one of claims 1 to 5, wherein there is provided a display which is capable of transmitting a light signal, which indicates the state of the method.

**7.** A method according to claim 6, wherein the signal is of a different colour if the value of the difference described in step m) in claim 1 is greater than, equal to or less than the cost value and/or reduced consumption imposed by the user, or, alternatively it is of variable intensity of a colour or of different colours in accordance with the difference with respect to the cost value and/or reduced consumption.

**8.** A method according to claim 6, wherein the display indicates the state of the energy efficiency of the installation.

**9.** A method according to claim 8, wherein the signal is of a different colour if the value of the real energy efficiency of the installation is greater than, equal to or less than the energy efficiency value indicated by the user or directed by the producer of the installation.

**10.** A method for controlling the thermal capacity of a building or a habitation unit comprising the following steps:

a) recording the external temperature with respect to the building or habitation unit;
b) measuring the internal temperature of the building or habitation unit;
c) calculating the heating or cooling line of the building or habitation unit so as to define the internal temperature gradient of the building or habitation unit in relation to the external temperature;
d) measuring the time of variation of 1°C, or a fraction of a degree, with the air-conditioning installation off;
e) inserting and representing the identification in a reserved user area and/or sending the identification to at least one or a plurality of remote display devices which are arranged at the premises of the user.

**11.** A method for calculating the mean cost of the energy consumption of a user, comprising:

a) calculating the energy consumption of a heating or cooling installation necessary in order to increase or decrease by 1°C or a fraction of a degree the internal temperature of a building or habitation unit;
b) inserting and representing the identification in a reserved user area and/or sending the identification to at least one or a plurality of remote display devices which are arranged at the premises of the user.

**12.** A method for establishing the economic advantage of the operating programme of an air-conditioning installation comprising:

a) establishing the time bands with recording of the presence of a living subject, in particular human being in a building or a habitation unit;
b) identifying the heating times in the absence of the presence inside the building or habitation unit;
c) representation in a reserved user area, and/or sending the identification to at least one or a plurality of remote display devices which are arranged at the premises of the user, of the times at which the building or unit was heated in the absence of the presence and the relevant cost incurred, calculated on the basis of the data of the contract of the provider, the data having been previously inserted in a reserved user area located in a remote system.

**13.** A system for controlling an electrical and/or air-conditioning installation comprising:

a) one or more devices for collecting data at the point of use, which are operationally connected to a gateway; the gateway being operationally connected to
b) a remote system, the remote system optionally being operationally connected to:
c) one or more display devices at the point of use;

**characterized in that** the display devices are incorporated in the gateway.

**14.** A system according to claim 13, wherein the one or more display devices are provided so as to indicate the state of the system.

**15.** A system according to claim 13 or 14, wherein the one or more devices are a series of LEDs which is provided to generate a variable light signal in accordance with the state of the system, and optionally an optical guide for the diffusion of the light signal.

**16.** A computer programme for carrying out the method of any one of claims 1 to 12, when the computer programme is carried out in a data-processing system.

**17.** A computer programme comprising a means which can be used by a computer, the computer programme, when it is carried out in a data-processing system, causing the system to carry out the method of any one of claims 1 to 12.

**18.** A control device of an electrical and/or air-conditioning installation comprising means for carrying out the steps of the method according to any one of claims 1 to 12.

**19.** An electrical and/or air-conditioning installation comprising the device of claim 18.

**FIG.1**

## DD/MM/YY

_ _ _ _ **Mean consumption curve**

_____ **Objective curve**

*FIG:2*

FIG.3

Remote System

40

MQTT Broker

Display

GATEWAY

Electric Meter — Zigbee

Environmental Sensors — Zigbee

Methane Gas Sensor — Modbus

H2O Flow Sensor — Modbus

H2O Temp. Sensor — Modbus

end-user devices

41
43
42
44
45
38
39
37
36
31
32
33
34
35
3

Real Consumption lower than Objective Consumption

Objective Consumption Monday

Realtime Consumption

**FIG.4A**

Real Consumption lower than Objective Consumption

Objective Consumption

Actual Consumption

Monday Tuesday Wednesday Thursday Friday

Week from xx/yy/zzzz al xx/yy/zzzz

**FIG.4B**

Actual consumption versus monthly objective consumption

FIG.4C

Europäisches
Patentamt

European
Patent Office

Office européen
des brevets

## EUROPEAN SEARCH REPORT

Application Number

EP 15 19 4019

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/163746 A1 (DREW DAVID SCOTT [US] ET AL) 12 June 2014 (2014-06-12) * paragraph [0026] - paragraph [0032]; claims 1-4; figures 1-7 * ----- | 1-19 | INV. G06Q50/06 |
| X | US 2004/119608 A1 (RAO REKAPALLI KRISHNAMOHAN [IN] ET AL) 24 June 2004 (2004-06-24) * paragraph [0050] - paragraph [0065]; claim 1; figures 1-9 * ----- | 1-19 | |
| X | US 2002/007388 A1 (BANNAI MASAAKI [JP] ET AL) 17 January 2002 (2002-01-17) * paragraph [0044] - paragraph [0059]; claims 1, 8; figures 1-12 * ----- | 1-19 | |
| X | US 2014/118384 A1 (BUCKLEY EDWARD [US] ET AL) 1 May 2014 (2014-05-01) * paragraphs [0083], [0092]; claim 1; figures 4-8, 10 * ----- | 1-19 | |
| | | | TECHNICAL FIELDS SEARCHED (IPC) G06Q G09G |

The present search report has been drawn up for all claims

| Place of search | Date of completion of the search | Examiner |
|---|---|---|
| Munich | 16 February 2016 | Viets, Ana |

EPO FORM 1503 03.82 (P04C01)

## ANNEX TO THE EUROPEAN SEARCH REPORT
## ON EUROPEAN PATENT APPLICATION NO.

EP 15 19 4019

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2016

| Patent document cited in search report | | Publication date | Patent family member(s) | | Publication date |
|---|---|---|---|---|---|
| US 2014163746 | A1 | 12-06-2014 | US<br>US<br>US | D672666 S1<br>D699130 S1<br>2014163746 A1 | 18-12-2012<br>11-02-2014<br>12-06-2014 |
| US 2004119608 | A1 | 24-06-2004 | AU<br>CN<br>EP<br>US<br>WO | 2002348737 A1<br>1751535 A<br>1574106 A1<br>2004119608 A1<br>2004057907 A1 | 14-07-2004<br>22-03-2006<br>14-09-2005<br>24-06-2004<br>08-07-2004 |
| US 2002007388 | A1 | 17-01-2002 | JP<br>JP<br>US<br>US | 4523124 B2<br>2002032438 A<br>2002007388 A1<br>2007094043 A1 | 11-08-2010<br>31-01-2002<br>17-01-2002<br>26-04-2007 |
| US 2014118384 | A1 | 01-05-2014 | TW<br>US<br>WO | 201423697 A<br>2014118384 A1<br>2014070615 A1 | 16-06-2014<br>01-05-2014<br>08-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1593072 A
- WO 2003025898 A
- US 20110029461 A
- US 7463986 B
- EP 2261608 A